# EUROPEAN PATENT SPECIFICATION

(11) **EP 0 385 723 B1**
(45) Date of publication and mention of the grant of the patent: **13.10.1993**
(21) Application number: 90302077.4
(22) Date of filing: 27.02.1990
(51) Int. Cl.: B60G 17/015

(54) **Control apparatus for support unit of vehicle**
Steuerung für eine Radaufhängungseinheit eines Fahrzeugs
Commande pour unité de suspension de véhicule

(30) Priority: 27.02.1989 JP 47503/89 U
(43) Date of publication of application: 05.09.1990
(73) Proprietor: MITSUBISHI DENKI KABUSHIKI KAISHA, Tokyo (JP)
(72) Inventor: Shunichi, Wada, 840, Chioda-cho, Himeji-Shi, Hyogo-ken, (JP)
(74) Representative: Boon, Graham Anthony

(56) References cited:
- EP-A- 0 139 145
- EP-A- 0 256 786
- EP-A- 0 297 606
- JP-A-62 023 805
- US-A- 476 911
- US-A- 4 789 935
- PROCEEDINGS OF THE 1987 IECON
- ELECTRICAL DESIGN NEWS

## Description

The present invention relates to a control apparatus for a support unit of a vehicle body as a suspension and/or a stabilizer, and more particularly, to a control apparatus which can perform the optimum control of the characteristics of the suspension and/or stabilizer according to the fuzzy rule.

Heretofore, a control apparatus for a support unit, that is, a suspension and/or a stabilizer of a vehicle body such as an automobile has been digitally controlling such subjective and vague factors as operation stability and comfort to ride in the vehicle which are affected by characteristics of the suspension and/or stabilizer.

This kind of arts is disclosed in US-A-4,796,911 by Kuroki et al. and US-A-4,789,935 by Buma et al.

In such prior arts, however, control has been performed by digital processing, then, there exist problems that it is not sufficient to judge characteristics of the suspension and/or stabilizer and that the control can not be performed with high accuracy.

When the suspension and/or stabilizer of vehicle are controlled, such contrary factors as operation stability and comfort to ride in the vehicle must be considered, then, when the control of those units is performed by digital processing, there exist many difficult problems that either of those factors should have priority over the other, that hunting should occur when the control is performed, or the like.

JP-A-62023805 describes a control device which uses fuzzy rules to allow the drive comfort of an automobile to be optimised in the light of measured variables of the ride.

The foregoing problems are solved in accordance with the present invention, and it is an object of the present invention to provide a control apparatus which can perform control with high accuracy by judging characteristics of a support unit such as a suspension and/or a stabilizer of a vehicle according to the fuzzy rule.

Accordingly, the invention provides a method for controlling the support unit of a vehicle, comprising the detection of variables of the state of the vehicle as inputs, calculation of similarity functions by comparison of said inputs with stored membership characteristic functions, calculation as outputs of variables of the support unit characteristic judged on the basis of said similarity functions, detection of the support unit characteristic and adjustment of said support unit characteristic in accordance with said outputs, as known from JP-A-62023805, characterized in that:
the variables of the state of the vehicle comprise the vertical oscillation frequency of the vehicle body, the speed of the vehicle, and the steering angle speed;
that the similarity functions comprise a first road similarity function calculated from the vehicle body vertical oscillation frequency and a first road waviness membership characteristic function, a second road similarity function calculated from the vehicle body vertical oscillation frequency and a second road roughness membership characteristic function, and a roll state similarity function calculated from the speed of the vehicle, the steering angle speed and a roll state membership characteristic function;
and that the support unit characteristic is maintained for a predetermined time after adjustment thereof.

The control apparatus for support unit of a vehicle of the present invention is provided with a state detecting means for detecting physical quantity or state quantity related to the support unit such as a suspension and/or stabilizer of a vehicle, a judging means for judging the most optimum characteristics of the suspension and/or stabilizer from the detected result of the state detecting means according to the fuzzy rule, an adjusting means for adjusting the damping force and/or spring constant of the suspension, and/or the torsion force of the stabilizer according to the judged result of the judging means, and a keeping means for setting the period for keeping the state after the damping force and the like have been varied once.

In the control apparatus for support unit of a vehicle of the present invention, the most optimum characteristic of the support unit, that is, a suspension and/or stabilizer are judged according to the fuzzy rule, and even where any control condition which has not been stored should be stored therein, its similarity to the existing judging rules is analoguely judged, and according to the composite result of the similarity of plural control rules, the most optimum control output is automatically searched. In addition to it, according to the fuzzy rule, it is automatically and analoguely judged to give priority to either the comfort to ride in the vehicle or the operation stability, though the judging has originally been difficult to be judged by the digital processing because both of them depends on human's subjective judgment. Furthermore, the characteristics of the suspension and the like which have been varied once are kept for a predetermined period in order to prevent the hunting.

The above and further objects and features of the invention will more fully be apparent from the following detailed description with accompanying drawings.
Fig. 1 is a block diagram illustrating an example of arrangement of control apparatus for support unit of a vehicle of the present invention,
Fig. 2 is a flow chart illustrating its operational procedure, and
Fig. 3 through Fig. 9 are graphs for explaining the fuzzy rule.

Now, one embodiment of the present invention will be described below in detail with reference to the accompanying drawings.

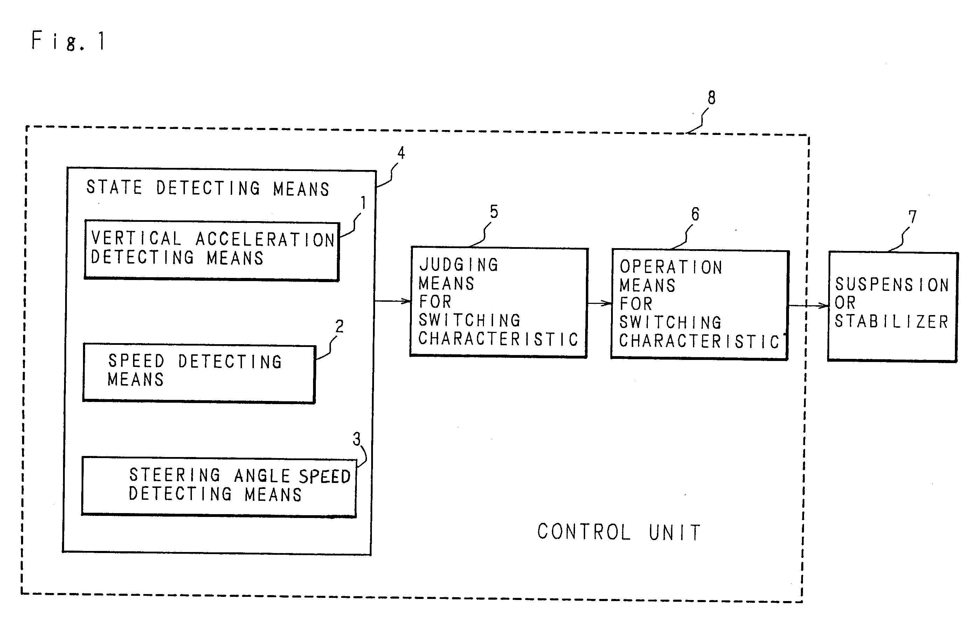

Fig. 1 is a block diagram illustrating one example of arrangement of control apparatus for support unit of a vehicle in accordance with the present invention.

In the figure, reference numeral 8 designates a control unit of the apparatus of the present invention, and reference numeral 7 designates a support unit such as a suspension and/or a stabilizer of a vehicle which is controlled by the control unit 8.

The control unit 8 is composed of a state detecting means 4 for detecting the state of a body of the vehicle on which the apparatus of the invention is mounted, a judging means for characteristic switching means 5 of the suspension or stabilizer 7, and an operation means for switching characteristic 6 of the suspension or stabilizer 7.

The state detecting means 4 is comprised of a vertical acceleration detecting means 1 for detecting vertical acceleration of the vehicle body, a speed detecting means 2, and a steering angle speed detecting means 3.

The control unit 8 controls switching of the characteristic of the suspension or stabilizer 7 according to the detected result of the state detecting means 4.

In addition, the control unit 8 is provided with a plurality of software timers. Each timer is used for timing the controlling duration of each characteristic, respectively.

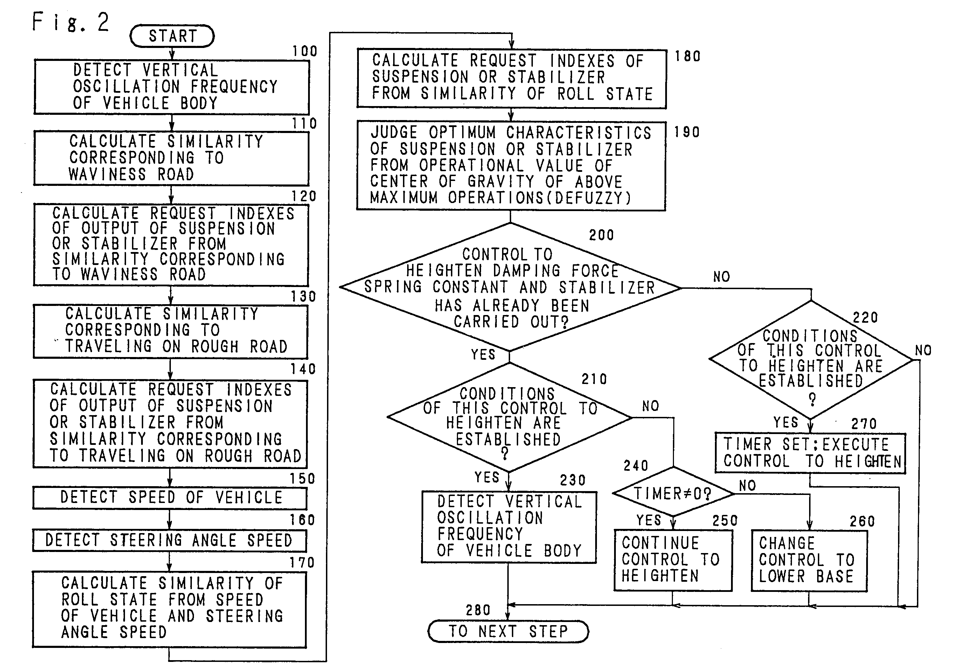

Now functional operation will be described below with reference to the flow chart of Fig. 2 showing operational states of the state detecting means 4 and the judging means for switching characteristic 5.

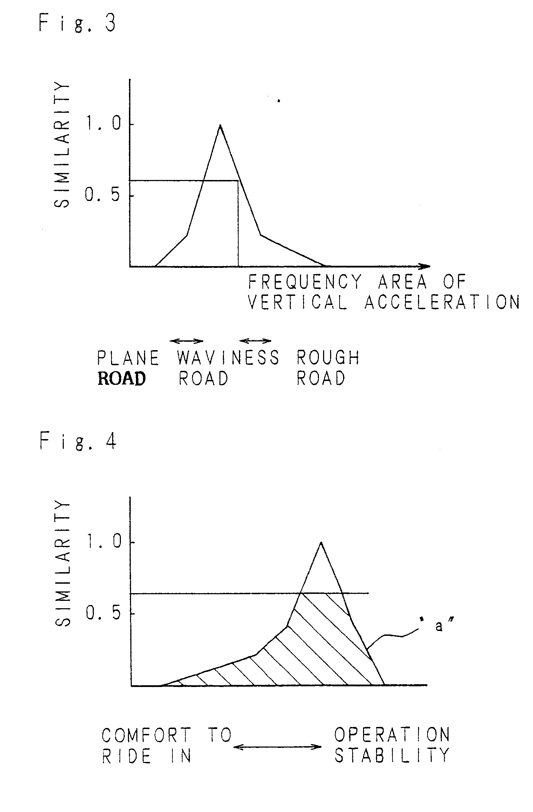

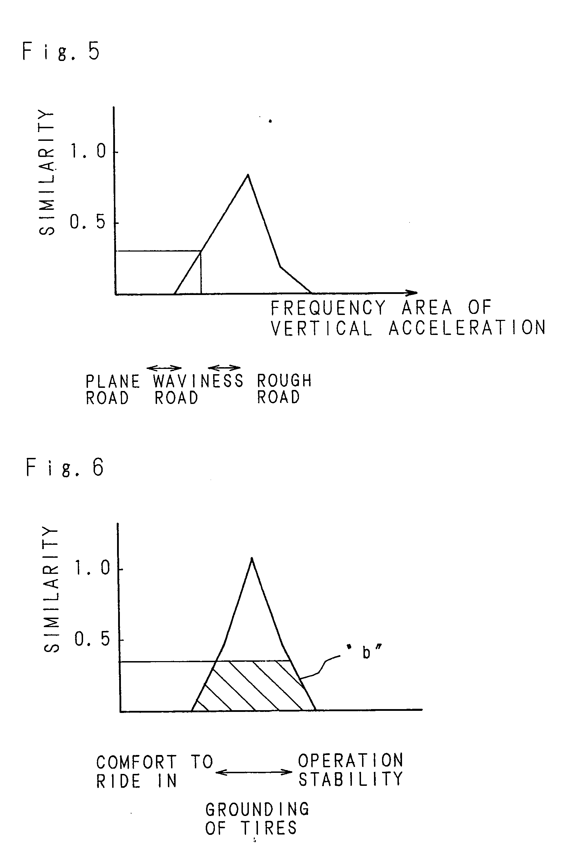

At step 100, the magnitude of vertical vibration of the vehicle body and its oscillation frequency are detected by the acceleration detecting means 1, and where more than the predetermined vibration is divided into a plurality of areas so as to be judged. Fig. 3 is a graph illustrating an antecedent portion of the membership characteristic function which designates a waviness road. Fig. 4 is a graph illustrating the consequent portion of the membership characteristic function which designates a waviness road.

At step 110, according to the antecedent portion of the fuzzy rule shown in Fig. 3, similarity, which is the fuzzy variable, of the waviness road to the frequency area of vertical acceleration is calculated. The frequency area in which the similarity has its peak point is the springing resonance area of vehicle body at a frequency of 1 Hz through 2Hz.

At step 120, according to the similarity which has been calculated at step 110, the maximum value of the membership characteristic function of the consequent portion of fuzzy rule is decided and upper limit cutting is done, then, a portion "a" shown by hatching is obtained. As a result, request indexes of the comfort to ride in the vehicle and the operation stability are analoguely calculated.

In Figs. 4, 6, 8 and 9, the side of the "comfort to ride in" shows that the damping force and spring constant of the suspension have the lower values and the torsion force of the stabilizer has the weaker value, and the side of the "operation stability" shows that those forces and the like have the higher and stronger, which are values contrary to those of the side of the comfort to ride in.

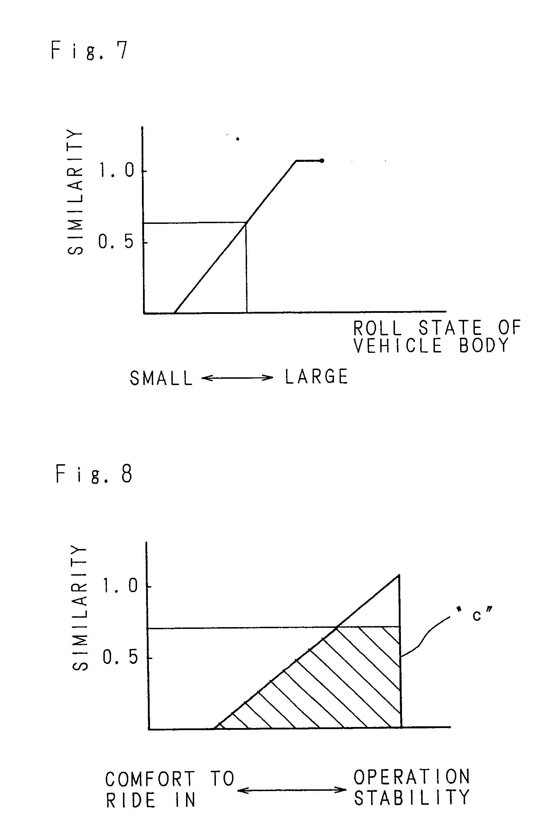

At step 130, similarity corresponding to the traveling on the rough road is calculated. In other words, Figs. 5 and 6 designate the antecedent portion and the consequent portion of the membership characteristic function showing the rough road, respectively. At step 130, according to the magnitude of vertical vibration of vehicle body and its oscillation frequency which have been calculated at step 100, similarity corresponding to the traveling on the bad road is calculated with reference to Fig. 5.

In addition, the frequency area in which similarity is at its peak point is in the area of unspringing resonance of vehicle body at a frequency of 10 Hz through 20Hz, for example.

At step 140, according to the similarity which has been calculated at step 130, the maximum value of the consequent portion of membership characteristic function is decided and upper limit cutting is done as shown in Fig. 6, then, such a portion "b" as shown by hatching in Fig. 6 is obtained. Accordingly, request indexes of the comfort to ride in, operation stability, and grounding of tires are analoguely calculated.

At step 150, speed of vehicle is detected by the speed detecting means 2.

At step 160, steering angle speed of a steering is detected by the steering angle speed detecting means 3.

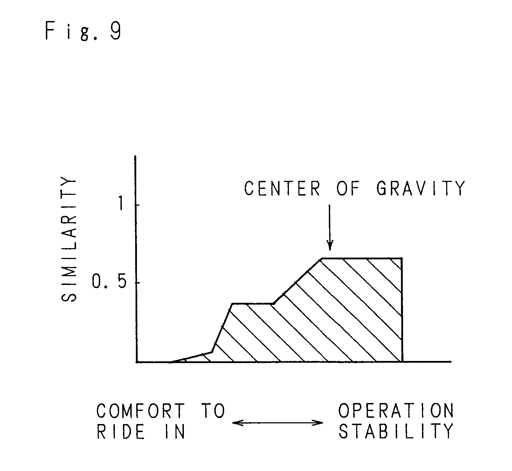

Figs. 7 and 8 are graphs showing the antecedent portion and the consequent portion of the membership characteristic function showing roll state of the vehicle body.

At step 170, according to the speed of the vehicle and the steering angle speed, the roll state of vehicle body is detected, and according to the antecedent portion of the fuzzy rule shown in Fig. 7, similarity corresponding to the roll state of vehicle body is calculated.

At step 180, according to the similarity which has been calculated at step 170 as shown in Fig. 8, the maximum value of membership characteristic function of the consequent portion of the fuzzy rule is decided and upper limit cutting is done, and a portion "c" shown by hatching in Fig. 8 is obtained. Accordingly, request indexes of the comfort to ride in and operation stability are analoguely calculated.

Fig. 9 is a graph showing the membership characteristic function designating the result of the final inference.

At step 190, the maximum operation is performed so as to obtain only the portions with the maximum values of such hatched portions "a", "b" and "c" which have been obtained at step 120, 140 and 180, respectively. As a result, such a function as shown in Fig. 9 is obtained, and in addition to it, its center of gravity is calculated, then, indexes of the damping force and spring constant of the suspension and the torsion force of the stabilizer are judged so that those forces and the like can realize the most optimum comfort to ride in and operation stability. According to the result of the judging of those indexes, operational values (defuzzy value : output) of the damping force and spring constant of the suspension and the torsion force of the stabilizer are judged.

At step 200, it is judged whether the control to heighten the damping force and spring constant of the suspension and the torsion force of the stabilizer has already been carried out or not. And where the result is YES, namely, the control has already been on execution, the processing proceeds to the step 210, and where it has not, the processing proceeds to the step 220, respectively.

At step 210, it is judged whether the result of this operation has more than the same conditions as the control which has been on execution or not, and where the result is YES, at step 230, a value of a predetermined timer is reset according to the delay time, and where the result of this operation is judged to have the same conditions, the control is continued intact, and where the result of this operation is judged to have enough conditions to heighten those forces, the control is changed to be heighten them, following which the processing proceeds to the next step 280.

On the other hand, where the result is NO at the step 210, namely, the result of this operation has less than the same conditions as the control which has already been on execution, at step 240, it is judged whether values of each timer are "0" or not. As the result, where the values are not "0" (in the case where there is remaining time), the control to heighten those forces is continued at step 250, and where the values of each timer have already shown "0", at step 260, the control is changed to have its lower base, and the processing proceeds to the next step 280.

And where the result of the judging is NO at step 200, that is, the control to heighten the damping force and spring constant of the suspension and the torsion force of the stabilizer has not yet been carried out, at step 220, it is judged whether enough conditions of this control to heighten those forces are established or not. Where the conditions are established, at step 270, each corresponding timer is set so as to carry out the control to heighten the damping force and spring constant of the suspension and the torsion force of the stabilizer. And where the conditions are not established, the processing proceeds intact to the next step 280.

In the aforementioned embodiment, either the suspension or the stabilizer is used for a support unit of a vehicle, however, it is needless to say that both of those units can simultaneously be controlled.

Furthermore, in the aforementioned embodiment, a vertical acceleration detecting means is used as a replacement of a leveling sensor generally used in conventional apparatus, then, it can easily be mounted to the vehicle body. In addition, the state of the roll speed and the like which is operated from the steering angle speed and the vehicle speed is set to be the fuzzy variable and similarity of the roll angle or of the roll angle speed is substantially continuously judged, then, in comparison with the judgment of the damping force with the value of "0" or "1" by to the conventional mapping method, control of the suspension or stabilizer can be realized so as to be more suitable for the practical operation of a steering wheel.

As can be seen from the above description, in the control apparatus for support unit of a vehicle of the present invention, by employing the fuzzy rule, where any control condition which has not been stored in the apparatus should be inputted therein, similarity of it to the existing judging rule is analoguely judged, and from the composite result of similarity of plural control rules, the most optimum control rule is automatically searched and outputted. As a result, just with storing such few of control rules, the fine control can be realized.

Further, in the control apparatus for support unit of a vehicle of the present invention, by composing the results of similarity of plural control rules and calculating its center of gravity by arithmetic operation, whether either the comfort to ride in the vehicle or the operation stability should be satisfied can be automatically and analoguely judged with continuous values.

And in the control apparatus for support unit of a vehicle of the present invention, moreover, from the operated result according to the fuzzy rule, once the control to heighten the damping force and spring constant of the suspension and/or the torsion force of the stabilizer has been carried out, then, the control state is kept for a predetermined period, and where the state detection signal of vehicle body should be repeated to be intermittent or the state detection signal of vehicle body should be instantaneously appeared and dissipated in a minute, hunting is prevented so as to ensure the continuous operation stability.

In addition, in the control apparatus for support unit of a vehicle of the present invention, the comfort to ride in which originally depends on human's subjective or feeling is adapted to be judged by setting the frequency of vertical acceleration of vehicle body as the fuzzy variable and having similarity which has its peak point in the area of springing resonance frequency of vehicle body, then, it is possible to control the damping force and spring constant of the suspension and/or the torsion force of the stabilizer and the like so that those forces and the like can be suitable for human's minute feeling.

Furthermore, grounding of tire is adapted to be judged by setting the frequency of vertical acceleration of vehicle body as the fuzzy variable and having similarity which has its peak point in the area of unspringing resonance frequency of vehicle body, then, it is possible to perform the close control of grounding of tire.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within the meets and bounds of the claims, or equivalence of such meets and bounds thereof are therefore intended to be embraced by the claims.

## Claims

1. A method for controlling the support unit (7) of a vehicle, comprising the detection of variables of the state of the vehicle as inputs, calculation of similarity functions by comparison of said inputs with stored membership characteristic functions, calculation as outputs of variables of the support unit characteristic judged (5) on the basis of said similarity functions, detection of the support unit characteristic and adjustment (6) of said support unit characteristic in accordance with said outputs, characterized in that:
the variables of the state of the vehicle comprise the vertical oscillation frequency of the vehicle body, the speed of the vehicle, and the steering angle speed;
that the similarity functions comprise a first road similarity function calculated from the vehicle body vertical oscillation frequency and a first road waviness membership characteristic function (110), a second road similarity function calculated from the vehicle body vertical oscillation frequency and a second road roughness membership characteristic function (130), and a roll state similarity function calculated from the speed of the vehicle, the steering angle speed and a roll state membership characteristic function (170);
and that the support unit characteristic is maintained for a predetermined time after adjustment thereof.

2. A control method as set forth in Claim 1, wherein said support unit is a suspension and said characteristic is the damping force and/or spring constant of said suspension.

3. A control method as set forth in Claim 1, wherein said support unit is a stabilizer and said characteristic is the torsion quantity of said stabilizer.

4. A control method as set forth in Claim 1, wherein said support unit is a suspension and stabilizer and said characteristics are the damping force and/or spring constant of said suspension, and torsion quantity of said stabilizer.

## Patentansprüche

1. Verfahren zur Steuerung der Trageinheit (7) eines Fahrzeugs, mit den Schritten der Erfassung von Variablen des Zustands des Fahrzeugs als Eingangssignale, der Berechnung von Ähnlichkeitsfunktionen durch Vergleich der Eingangssignale mit gespeicherten Zugehörigkeitscharakteristikfunktionen, Berechnung von Variablen der Trageinheitscharakteristik, die auf der Basis der Ähnlichkeitsfunktionen beurteilt (5) wird, als Ausgangssignale, Ermittlung der Trageinheitscharakteristik und Einstellung (6) der Trageinheitscharakteristik gemäß den Ausgangssignalen, dadurch gekennzeichnet, daß:
die Variablen des Zustands des Fahrzeugs die vertikale Oszillationsfrequenz des Fahrzeugkörpers, die Geschwindigkeit des Fahrzeugs und die Steuerwinkelgeschwindigkeit umfassen;
daß die Ähnlichkeitsfunktionen eine aus der vertikalen Oszillationsfrequenz des Fahrzeugkörpers und einer ersten Straßenwelligkeitszugehörigkeitscharakteristikfunktion (110) errechnete erste Straßenähnlichkeitsfunktion, eine aus der vertikalen Oszillationsfrequenz des Fahrzeugkörpers und einer zweiten Straßenrauheitszugehörigkeitscharakteristikfunktion (130) errechnete zweite Straßenähnlichkeitsfunktion, und eine aus der Geschwindigkeit des Fahrzeugs, der Steuerwinkelgeschwindigkeit und einer Rollzustandszugehörigkeitscharakteristikfunktion (170) errechnete Rollzustandsähnlichkeitsfunktion umfaßt;
und daß die Trageinheitscharakteristik für einen vorbestimmten Zeitraum nach ihrer Einstellung aufrechterhalten wird.

2. Steuerungsverfahren nach Anspruch 1, bei dem die Trageinheit eine Aufhängung und die Charakteristik die Dämpfungskraft und/oder Federkonstante der Aufhängung ist.

3. Steuerungsverfahren nach Anspruch 1, bei dem die Trageinheit ein Stabilisator und die Charakteristik die Torsionsgröße des Stabilisators ist.

4. Steuerungsverfahren nach Anspruch 1, bei dem die Trageinheit eine Aufhängung und ein Stabilisator ist und die Charakteristika die Dämpfungskraft und/oder Federkonstante der Aufhängung und die Torsionsgröße des Stabilisators sind.

## Revendications

1. Méthode de commande du système porteur (7) d'un véhicule, comprenant la détection de paramètres de l'état du véhicule, comme entrées ; le calcul de fonctions de similitude par comparaison des dites entrées avec des fonctions caractéristiques élémentaires mémorisées ; le calcul, comme sorties, de paramètres de la caractéristique du système porteur,évalués (5) sur la base desdites fonctions de similitude ; la détection de la caractéristique du système porteur ; et l'ajustement (6) de ladite caractéristique du système porteur conformément aux dites sorties ;
caractérisée en ce que :
les paramètres de l'état du véhicule comprennent la fréquence d'oscillation verticale de la carrosserie du véhicule, la vitesse du véhicule et la vitesse de changement de l'angle de direction ;
les fonctions de similitude comprennent une première fonction de similitude de route, calculée à partir de la fréquence d'oscillation verticale de la carrosserie du véhicule et d'une première fonction caractéristique élémentaire d'ondulation de la route (110)) , une deuxième fonction de similitude de route calculée à partir de la fréquence d'oscillation verticale de la carrosserie du véhicule et d'une deuxième fonction caractéristique élémentaire de rugosité de la route (130), et une fonction de similitude d'état de roulement calculée à partir de la vitesse du véhicule, de la vitesse de changement d'angle de direction et d'une fonction caractéristique élémentaire d'état de roulement (170) ; et en ce que la caractéristique du système porteur est conservée pendant un temps prédéterminé, après son réglage.

2. Méthode de commande suivant la revendication 1, dans laquelle ledit système porteur est une suspension et ladite caractéristique est la force d'amortissement et/ou la constante d'élasticité de ladite suspension.

3. Méthode de commande suivant la revendication 1, dans laquelle ledit système porteur est un stabilisateur et ladite caractéristique est la quantité de torsion dudit stabilisateur.

4. Méthode de commande suivant la revendication 1, dans laquelle ledit système porteur comprend une suspension et un stabilisateur, et lesdites caractéristiques sont la force d'amortissement et/ou la constante d'élasticité de ladite suspension et la quantité de torsion dudit stabilisateur.
